# EUROPEAN PATENT SPECIFICATION

(11) **EP 1 905 237 B1**
(45) Date of publication and mention of the grant of the patent: **11.07.2018**
(21) Application number: 06777814.2
(22) Date of filing: 17.07.2006
(51) Int. Cl.: H04N 7/10, H04N 17/00

(54) **CASCADABLE TV-SIGNAL DISTRIBUTION UNITS WITH LEVEL INDICATOR**
KASKADIERBARE FERNSEHSIGNALVERTEILUNGSEINHEITEN MIT STUFENANZEIGE
UNITES DE DISTRIBUTION DE SIGNAL DE TELEVISION EN CASCADE AVEC INDICATEUR DE NIVEAU

(30) Priority: 15.07.2005 EP 05106540
(43) Date of publication of application: 02.04.2008
(60) Divisional application: 10165022.4
(73) Proprietor: Unitron NV, 8970 Poperinge (BE)
(72) Inventor: DELEU, Stephen, B-9080 Beervelde (BE)
(74) Representative: IP HILLS NV
(86) International application number: PCT/EP2006/064341
(87) International publication number: WO 2007/009980

(56) References cited:
- EP-A2- 1 347 644
- US-A- 5 208 854
- US-A- 5 243 651
- US-A- 6 130 703
- US-B1- 6 486 907

## Description

### Technical field

The present invention generally relates to the field of TV-signal distribution systems for multiple dwelling units. More particularly, the invention relates to a system of cascadable TV-signal distribution units, and a method for installing such a system.

### Background art

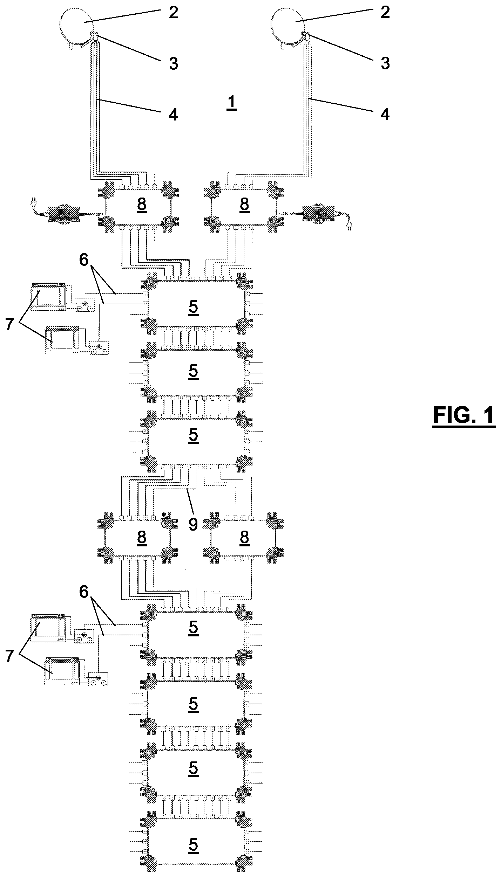

Multiple dwelling units (MDU) are systems where typically the satellite IF-band and terrestrial cable are distributed over different apartments or flats or the like. This can be done by the use of multiswitches, by the use of taps, such as for example described in EP 1 347 644 A2, or any other distributing devices known to the person skilled in the art. In the case of the multiswitches, it means that the signals coming from the head end (mostly on the roof) will be distributed over the whole building by cascading an amount of multiswitches. Typically, they will be installed inside the technical shaft of the building, and at each floor, customer drops will be tapped off to provide signals to the end-users. This is shown in figure 1. In every brand of multiswitches different types are available: mostly the range constitutes of 1 terrestrial input combined with 2, 4, 8, 12 or 16 satellite IF inputs and different amounts of taps, ranging typically from 4 to 24 customer drops. Unitron also provides multiswitches under the brand Johansson, see references 9940 to 9989. In most applications, each multiswitch (no matter how many inputs and how many outputs) acts the same: they bypass the "vertical" lines while tapping off a small amount of energy for the customer drop. The "vertical" lines then can be fed into the next multiswitch (cascading principle).

In all applications where multiswitches or other "cascadable units" are used, it is clear that a professional installation is needed. If the first units are not well tuned, it may affect the whole system. Therefore, the installer needs to use expensive measurement equipment for fine-tuning the system.

Nowadays, the installer more and more uses specialized software which takes into account a lot of parameters of the system, like carrier-to-noise, power and distortion, gain/loss, etc. to calculate the whole system in advance. However, this software is still based on assumptions, for instance what is the output level of the head end, what is the loss of the interconnecting coaxial cables, etc. In reality, the characteristics of the installed system usually differ from the assumed values, so the installed system still needs to be checked in the field. Consequently, the software does not relieve the installer from needing expensive measurement equipment.

### Disclosure of the invention

It is an aim of the present invention to provide a system of cascadable TV-signal distribution units with which a more optimal use of the hardware can be achieved.

This aim is achieved according to the invention with a system showing the technical characteristics of the first claim.

It is also an aim of the present invention to provide a more efficient method for installing a system of cascadable TV-signal distribution units.

This aim is achieved according to the invention with a method comprising the steps of claim 11.

As used herein, "TV-signal" is intended to mean any signal at any frequency which carries TV images, whether aerial or terrestrial.

As used herein, by "vertical lines" is not intended that the lines necessarily extend in vertical direction. This is just the term which is used in the art since the lines for transporting signals usually extend from a head end on the roof up to for example a multiswitch for the flats on the ground floor.

As used herein, by "horizontal lines" is not intended that the lines necessarily extend in horizontal direction. This is just the term which is used in the art for the lines which are branched off from the vertical lines to for example connect a customer to a multiswitch.

As used herein, with "cascadable unit" is meant any TV-signal distribution unit which is installed on one or more vertical lines of a TV-signal distribution system.

The system of the invention comprises a plurality of groups of one or more TV-signal distribution units, i.e. cascadable units which are connected on the vertical lines and/or other units which are connected on the horizontal lines. Each TV-signal distribution unit comprises a plurality of lines on which input signals coming from a head end are transported from an input side to an output side of the unit. According to the invention, at least one of the TV-signal distribution units of each group has the following features:
- at least one measurement means on each of the lines for measuring a signal characteristic of a TV-signal transported on that line,
- a programmable processing means connected to the measurement means and provided for comparing each of the measured signal characteristics with at least one programmable reference value and determining a signal quality from each comparison,
- indicator means connected to said programmable processing means and provided for indicating each of said signal qualities to an installer of the system.

In other words, a group of the system of the invention can for example comprise one TV-signal distribution unit having the measurement, processing and indicator means and one TV-signal distribution unit not having these means. A group can also be formed by only one TV-signal distribution unit which has the measurement, processing and indicator means. In general, each group comprises at least one TV-signal distribution unit having the measurement, processing and indicator means and possibly one or more TV-signal distribution units not having these means.

The programmable reference value or values can be programmed into each of the TV-signal distribution units at the factory and/or in the field. The units may also be reprogrammable, so that adjustments can be made later on.

By means of the indicator means, the installer is thus informed whether or not the transported signal on each of the lines has the required signal quality, which is programmed into the processing means by the programmable reference value. If the indicated signal quality is as required, no problems are to be expected and no adjustments are considered necessary. If the indicated quality does not meet the requirements, an adjustment is considered necessary to avoid problems.

With the TV-signal distribution units of the invention, the signal quality on each of the lines can be indicated towards the installer throughout the system without needing expensive measurement equipment. Such equipment is as it were incorporated into one or more TV-signal distribution units of each group. In this way, the installer is instantly informed where the signal quality does not meet the requirements and can immediately make the necessary adjustments to the system such as placement of an amplifier/attenuator between given stages of the cascade, thus saving time. The TV-signal distribution units of the invention can also obviate the need for calculation of the system in advance, since problems can be dealt with immediately in the field.

In one embodiment, the programmable processing means is provided for determining for each line whether the signal quality of the transported signal is "suitable" or "unsuitable" for distribution towards the end-users. In this embodiment, the programmable processing means for example determines the signal quality by checking if the measurement value is above or below the programmable reference value. Both qualities "suitable" and "unsuitable" can be subdivided in different values to provide further information.

The TV-signal distribution units of the system of the invention preferably themselves comprise adjustment means for adjusting the signal characteristic, which is measured by the measurement means, of the signal transported on at least one of the lines. The programmable processing means may be provided for controlling these adjustment means, so that the units are self-adjusting, and/or they may be accessible towards the installer for adjustments.

The system of the invention comprises one or more intermediate units for installation between the output side of one TV-signal distribution unit and the input side of another TV-signal distribution unit. This intermediate unit comprises adjustment means for adjusting the signal characteristic, which is measured in the TV-signal distribution units, of the signal on at least one of the lines. The intermediate unit can be placed where necessary, i.e. if the signal quality on the output side of a TV-signal distribution unit cannot be adjusted on that TV-signal distribution unit to meet the requirements. The intermediate unit is then placed and the adjustment is made until the requirements are met. The intermediate units may also comprise the measurement means, the programmable processing means and the indicator means in the same way as the other TV-signal distribution units.

The number of lines of each of the TV-signal distribution units can for example be from the range of 1 terrestrial input combined with 2, 4, 8, 12 or 16 satellite IF inputs. Any other number of lines is however also possible.

In a preferred embodiment, the measurement means which are provided on each of the lines of the TV-signal distribution units comprise a signal level measurement instrument. In this embodiment, the programmable processing means compare the measured signal levels with pre-programmed lower and upper reference values, to verify whether the signal level on the respective line is inside or outside a given window. In this way, the processing means deliver a signal quality "unsuitable", with the subdivision into "too weak" or "too strong" or a signal quality "suitable", meaning the signal level is within the pre-programmed window. The indicator means are preferably provided to indicate each of these possible values to the installer. This can for example be done by means of LEDs of different colours, but other indicator means are possible, such as for example an analog readout, an LCD or a light display, beep signals or any other visual or auditive indicator means known to the person skilled in the art.

In case the measured characteristic is the signal level as in the above embodiment, the intermediate unit comprises for example an amplifier/attenuator with an amplifying/attenuating circuit for amplifying/attenuating the signal level of at least one of the signals on the lines. The amplifier/attenuator can be provided with individual amplifying/attenuating circuits for each of the lines, so that the level of each of the lines can be controlled individually. Alternatively, separate amplifiers/attenuators for each line or groups of lines can be used. Any other intermediate units for adapting the signal level are also possible.

Using the above described system of TV-signal distribution units, the installation of the system becomes very simple. The installation method according to the invention comprises the following steps:
a) installing a group of TV-signal distribution units by connecting the input side of an uppermost TV-signal distribution unit of the group to lines for transporting TV-signals originating from a head end and subsequently connecting any other TV-signal distribution units of the group in cascade on the output side of the uppermost TV-signal distribution unit,
b) checking the signal quality on each of the lines by means of the indicator means of any of the TV-signal distribution units of the installed group,
c) where necessary, installing an intermediate unit before the uppermost TV-signal distribution unit of the group and/or in between two TV-signal distribution units of the group, the intermediate unit comprising adjustment means for adjusting the signal characteristic which is measured by the measurement means,
d) on the lines where necessary, adjusting the signal characteristic by means of the adjustment means of the installed intermediate unit and/or adjustment means of the TV-signal distribution units.

For the sake of clarity, it is repeated that a group of TV-signal distribution units according to the invention can for example comprise one TV-signal distribution unit having the measurement, processing and indicator means and one TV-signal distribution unit not having these means. A group can also be formed by only one TV-signal distribution unit which has the measurement, processing and indicator means. In general, each group comprises at least one TV-signal distribution unit having the measurement, processing and indicator means and possibly one or more TV-signal distribution units not having these means.

Steps a) to d) can be repeated for each subsequent group of TV-signal distribution units. The installer has the options of installing all groups at once and only afterwards installing the intermediate units where necessary or, more efficiently, installing the groups one by one, each time checking the indicator means of the group once it is installed and installing an intermediate unit before the group if necessary.

As each group has at least one TV-signal distribution unit which can immediately indicate when the signal quality does not meet the requirements, the installer is immediately aware of the problem and its location in the whole system. As a result, he can immediately install the appropriate intermediate unit on the most appropriate location.

It is preferred that each group comprises only a single TV-signal distribution unit, this unit then being one with the indicator means. In this way, optimal hardware efficiency can be achieved, since the intermediate units can now be placed only before the TV-signal distribution units where the signal quality would otherwise be insufficient. This can reduce the number of intermediate units which are installed in the system. However, groups of for example two TV-signal distribution units of which only one has the indicator means are also possible. In such a system, however, it may for example occur that an intermediate unit is placed before a TV-signal distribution unit without indicator means, whereas the signal quality on this unit would still be sufficient.

### Brief description of the drawings

The invention will be further elucidated by means of the following description and the appended figures.
Figure 1 shows a typical prior art system of TV-signal distribution units.
Figure 2 shows a system of TV-signal distribution units according to the invention before calibration.
Figure 3 shows a preferred embodiment of a TV-signal distribution unit, namely a so-called multiswitch, according to the invention.
Figure 4 shows the system of figure 2 after calibration.
Figure 5 shows another preferred embodiment of a TV-signal distribution unit, namely a so-called stacker, according to the invention.
Figure 6 shows the layout of a system according to the invention comprising the TV-signal distribution units of figure 5.
Figure 7 shows another system according to the invention comprising the TV-signal distribution units of figure 5 before calibration.
Figure 8 shows the input level of the TV-signal distribution units of the system of figure 7 before changes are made.
Figure 9 shows the input level of the TV-signal distribution units of the system of figure 7 while changes are being made.
Figure 10 shows the input level of the TV-signal distribution units of the system of figure 7 after calibration.
Figure 11 shows the system of figure 7 after calibration.

### Modes for carrying out the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

In the following, preferred embodiments of the invention will be described in which the signal characteristic which is measured is the signal level. The invention can however also be applied to measure and adjust any other signal characteristic. The idea of these preferred embodiments is to indicate in a visual manner what the levels are at certain points of the installation, for instance the level at each interconnection between the cascadable units can be visualized. As mostly several level indicators will be installed, this gives a simple overview of the whole system in the blink of an eye.

In the following, the invention will be mainly described in a system comprising a plurality of cascadable TV-signal distribution units connected on vertical lines originating from a head end. It is clear the invention can also be applied in units on the horizontal lines, or in units on both the horizontal and vertical lines.

The typical prior art system of figure 1 comprises a head end 1 with a couple of satellite dishes 2, each with an associated low noise block (LNB) 3. Eight "vertical lines" 4 run downwards from the head end 1 crossing the various floors of the MDU where cascadable TV-signal distribution units 5 are installed for distributing the signals on the vertical lines via "horizontal lines" 6 towards the end-user devices 7 (TVs, VCRs etc.) A terrestrial line 9 is added to the vertical lines from the uppermost cascadable unit onwards. All connections are made by means of coaxial cables. Usually, amplifiers 8 are installed between the head end 1 and the uppermost cascadable unit 5 and also somewhere in between two cascadable units 5, where the installer guesses that an amplifier is needed to boost up the level again. This is the trial-and-error method, which results in the system of figure 1. Disadvantages are that sufficient signal level on all stages after the complete system has been installed cannot be ensured, that the use of hardware is not optimal since for example too many amplifiers have been installed and that the system has to be calculated in advance with expensive software.

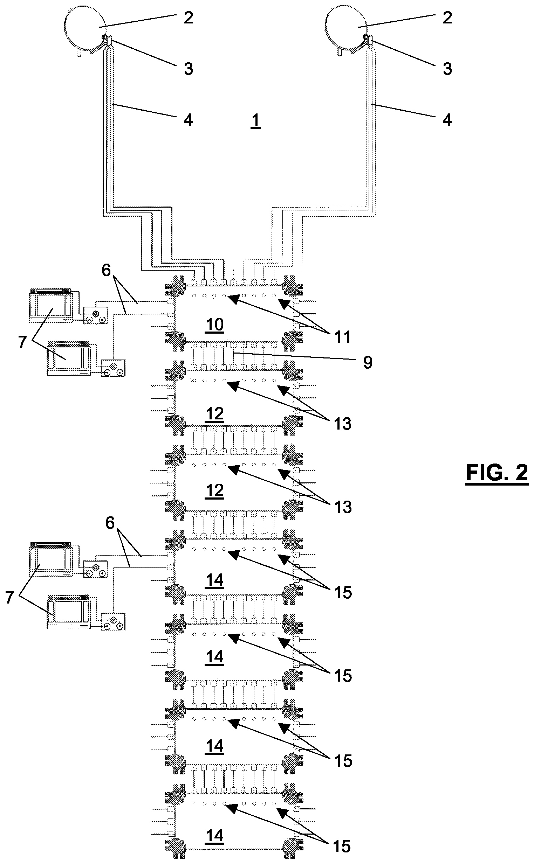

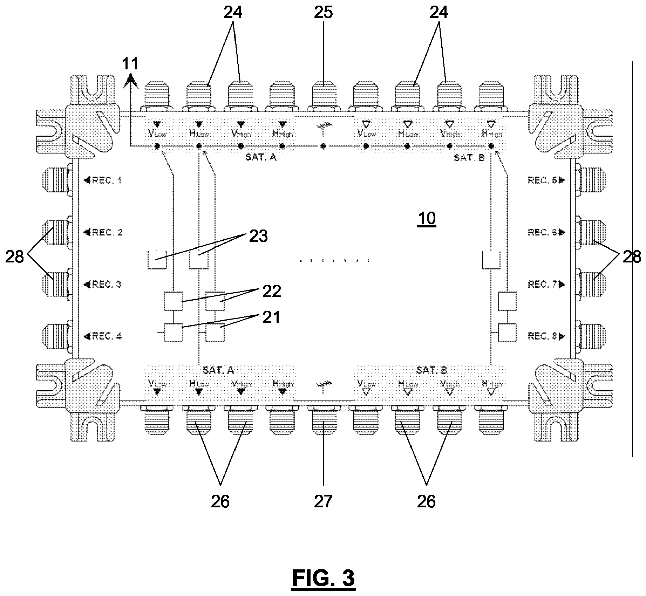

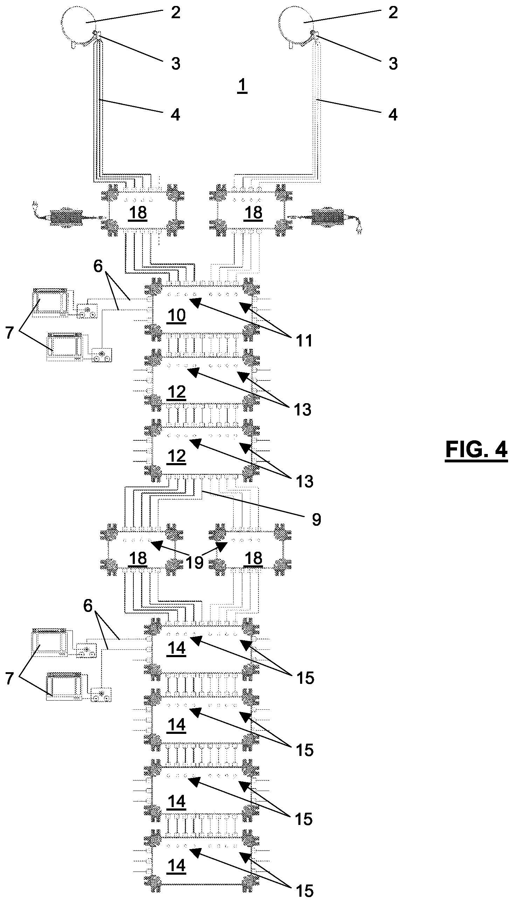

The system of figures 2 and 4 differs from the prior art system of figure 1 in the use of cascadable units 10, 12, 14 which are provided with signal level indicator LEDs 11, 13, 15 (these are all the same units, but different reference numbers are used to indicate different LED indications in figure 2). The cascadable unit 10, 12, 14 which is used in this system is shown in figure 3. It comprises on each vertical line a signal level measurement element 21, a processor 22 connected to the measurement element 21 and an amplifying/attenuating circuit 23 for enabling the installer to control the signal level on the vertical lines to a given extent on the cascadable unit itself. The amplifiers 18 which are installed as intermediate units of the system of figures 2 and 4 enable a larger variation of the signal level than the smaller amplifying/attenuating circuits 23 on the units. The processor 22 is connected to the measurement element 21 and provided for comparing the measured signal level a pre-programmed reference window and determining a signal quality from the comparison. Although separate processor blocks are shown in figure 3, it is also possible to use a common processor for all the vertical lines. The programmable reference window can be programmed into each of the cascadable units 10, 12, 14 at the factory and/or in the field. The processor 22 determines whether the signal quality of the transported signal is "suitable" or "unsuitable" for distribution towards the end-users and passes this information on to the installer by means of the LED 11, 13, 15. In the embodiment of figure 3, "suitable" means that the level is within the window, whereas "unsuitable" can mean above or below the window. The LEDs shown are bicolour LEDs, say for instance that green indicates an acceptable level, red means a too strong level and a third color (blinking red or yellow/orange (created by alternating the red and green)) can indicate a too weak signal. However, any other indicator means known to the person skilled in the art may also be used. For reasons of simplicity, the colours green, red and blinking red are used in the description below for indicating the respective levels, but it is evident that the choice of colours is arbitrary.

The cascadable unit 10 of figure 3 is a so-called multiswitch with on input side eight satellite IF inputs 24 and one terrestrial input 25, on output side eight satellite IF outputs 26 and one terrestrial output 27 for connection to the input side of the next multiswitch, and further eight so-called customer drops 28 for horizontal lines towards the end users 7. The internal circuitry connecting the customer drops 28 to the inputs 24, 25 and the operation principles of passing on the signals from the inputs 24, 25 to the customer drops 28 are known in the art and will therefore not be further described here. This is for example described in EP 1 347 644 A2, which is hereby incorporated by reference in its entirety.

With the system of figure 2, the installation occurs somewhat different. The whole system can for example be installed at once, making all interconnections from the head end 1 up to the end users 7 without taking the signal level into account. In the wording of the invention, all cascadable units 10, 12, 14 in this case form a single group. The simplicity of the invention can be seen in the next fine-tuning of the installation. The next action of the installer is to check the LEDs 11 of the first cascadable unit 10 (closest to the head end). If these are green, it means the head end is well dimensioned, if some of them are red, those specific "vertical" lines have to be attenuated, for instance by means of an attenuator, if some of them are blinking red, an amplifier 18 will have to be connected before the first unit on those specific "vertical" lines. Say in the latter is the case and amplifiers 18 are installed in the head end 1, after which the signal level is adjusted by means of the amplifying circuitry of the amplifiers 18 where necessary. Once all the LEDs 11 of the first cascadable unit 10 are green, the installer can easily check the influence of this action on the downstream cascadable units 12, 14. By looking at the LEDs 13, 15 of the second, the third, the fourth cascadable unit etc., he can check the signal level at each unit. As long as all the LEDs 13, 15 of the unit are green, no actions are required. Only when he encounters a red or red blinking LED, a new action has to be taken similar as before, of course depending on the color of the LED. Say the LEDs 13 of the second and third unit 12 are all still green, but that the fourth and further units 14 have one or more blinking red LEDs 15. This means that the signal level at the output side of the third unit has become too low on those vertical lines and that an amplifier 18 is needed in between the third and fourth cascadable units. The final result should be that all LEDs of all units are green, this means the system is calibrated. For the best result, the installer should begin at the input of the installation (for instance the headend) and work his way down step by step until the last unit. The final result is shown in figure 4. Like in this figure, even the amplifiers 18, which form intermediate units in the wording of the invention, could be produced with level indicators 19.

Alternatively, the installation can also be performed by installing the cascadable units 10, 12, 14 one by one, checking the signal levels and making the necessary adjustments if necessary before installing the next cascadable unit. In this case, each cascadable unit on its own forms a group in the wording of the invention.

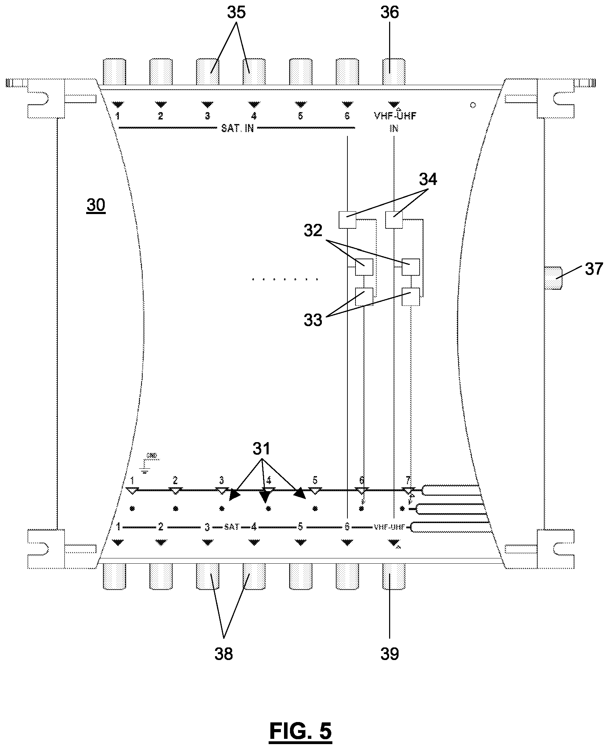

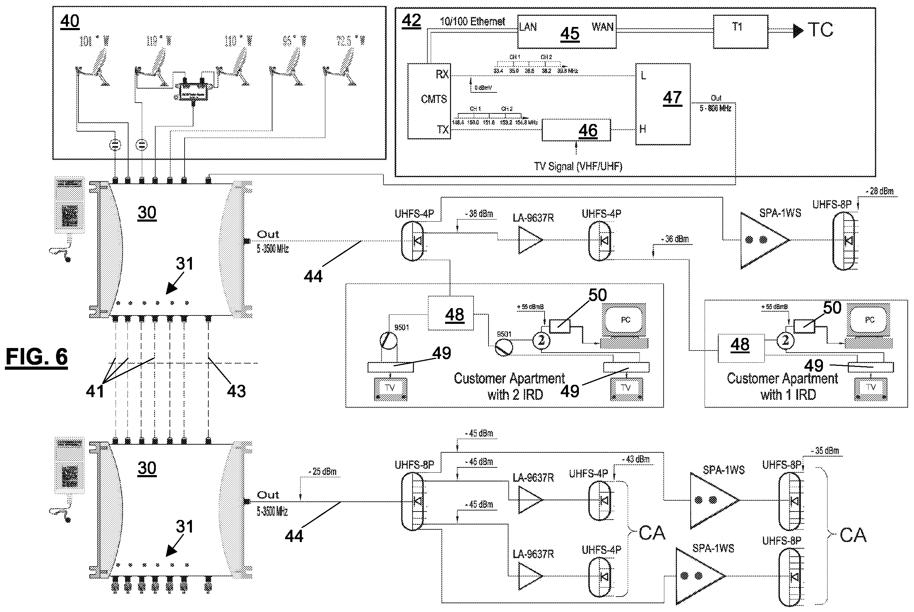

Another possible embodiment of the present invention is based on other existing products of Unitron, where the cascading principle is present as well, such as for example the SCU-2P3MDC, the SCU-4P5MTB, or other cascadable units. The cascadable unit 30 shown in figure 5 is based on Unitron's SCU-4P5MTB, a so-called "stacker". These stackers 30 are connected in cascade on the vertical lines, here six satellite IF inputs 35 and outputs 38 are provided alongside one terrestrial input 36 and output 39. Of course, the number of inputs and outputs can vary for different embodiments. Each stacker 30 taps off a small amount of energy from each vertical line, while sending most of the energy to the next cascadable stacker. This amount being tapped off can even be larger than what is being sent to the next cascadable unit, without affecting the applicability of the invention. Each stacker 30 performs a frequency multiplexing on the signals it receives on its inputs and stacks the frequency multiplexed signals together into a single wideband signal which is then placed on the horizontal line or "customer drop" 37. This horizontal line can be further supplied to different end users via a single cable and pass splitters, taps, amplifiers, cable-attenuation, or other possible devices before reaching a "de-stacker" at the end user. Such a system is shown in Fig. 6. With the version of the stacker 30 shown in figure 5, there is an automatic gain control (AGC) on each tap of each line, but this does not interfere with the vertical lines, it just sets the level at the input of the multiplexing circuitry.

The present invention is applied in the stacker 30 as follows. The detection circuit 32 of the AGC can act as the measurement means, as described in the disclosure of the invention. Each of the AGCs outputs a voltage which is a representation of the signal level at each input 35, 36. This representation can be linear but does not need to be, it can even be inverse, meaning the higher the signal level, the smaller the voltage. Next, this voltage can be fed into the microcontroller 33 of the AGC, which can be programmed by the manufacturer to decide if the signal level falls within a given window. In this example, the decision on the colour of the LEDs 31 can for instance be:
- < -45dBm : Blinking Red : Signal level is too weak
- -45dBm to -25dBm : Green : Signal level is good
- >-25dBm : Red : Signal level is too high
Of course the microcontroller gives a very flexible solution as it can be programmed what the range will be, what colour the LED should have in each range, etc. If desired, it could even be (re-)programmed in the field. The microcontroller 33 is further linked with an amplifying/attenuation circuit 34 by means of which it can adjust the signal level on the vertical line to a given extent if necessary.

The system of figure 6 is a video/internet integrated system comprising a satellite outdoor unit system 40 from which the vertical lines 41 depart and an internet head end 42 from which the terrestrial vertical line 43 departs. In the internet head end 42, the following components can be distinguished: a telephone company connection TC, a termination T1, a router 45, a cable modem termination system CMTS, a combiner 46 and a diplexer 47, which are known in the art and therefore need no further explanation here. The vertical lines 41, 43 pass a number of stackers 30 equipped with LEDs 31. The stackers 30 convert the signals on the vertical lines 41, 43 to wideband signals on the horizontal lines 44, which are supplied to customer apartments CA via one or more of the following distribution devices: splitters UHFS-4P and UHFS-8P, amplifiers LA-9637R, which are known in the art and therefore need no further explanation here, and signal degradation compensation units SPA-1WS, which will be discussed further on. In the customer apartments, the following devices can be distinguished: a "de-stacker" 48, satellite integrated receiver decoders (IRD) 49 associated with each TV set, modems 50 associated with PCs, which are known in the art and therefore need no further explanation here. Throughout the system, examples of possible signal levels are indicated in dB along with examples of possible frequencies or ranges in MHz.

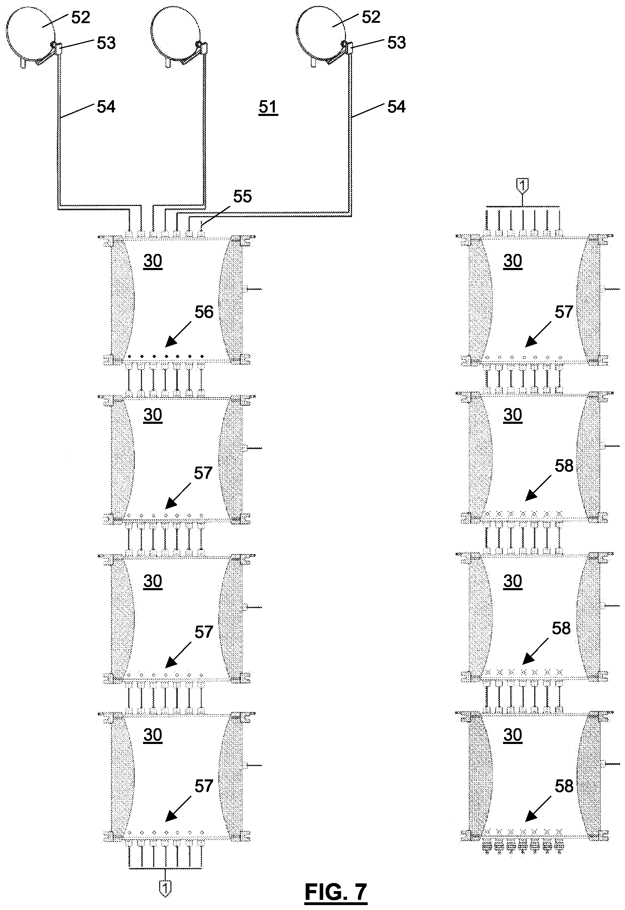

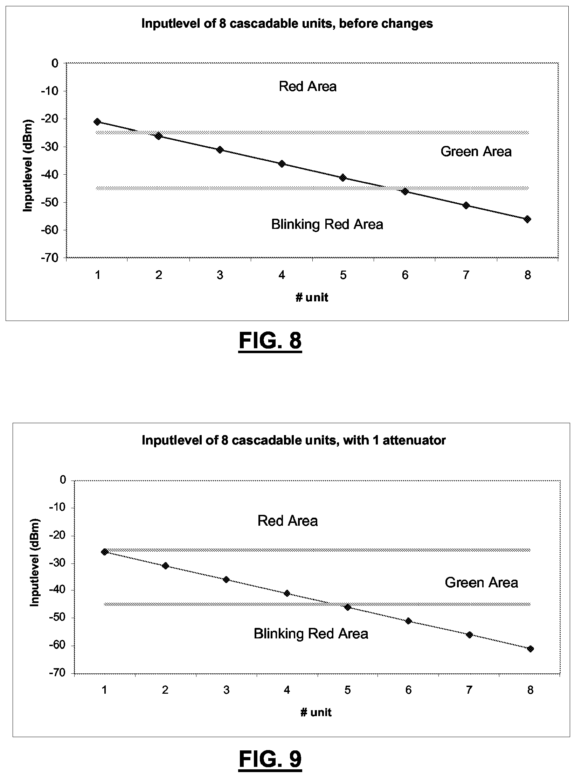

In figure 7 a system is shown with 8 stackers 30 in cascade before calibration, i.e. the installation has been completed by installing all the stackers in cascade as a group without taking care of the signal level. Like before, the system comprises a head end 51 with satellite dishes 52 and LNBs 53, resulting in six vertical lines 54. Again, there is one additional terrestrial line 55. For simplicity of the following explanation, all vertical lines are supposed to have the same signal level over the whole system, but it is evident that in reality this may not be the case. In figure 8 the variation of signal level over the system is shown at the input of each stacker 30. It is clear that the 8 stackers can not all operate within the green window of 20dB, as each unit can have a loss of up to 5dB (included cable loss). As shown in figure 8, only the second to fifth units have an input level within this window, while the first unit has an input level above the window and the sixth to eighth units have an input level below the window. This situation is reflected in figure 7: the LEDs 56 of the uppermost unit are coloured red, the LEDs 57 of the four following units are coloured green and the LEDs 58 of the bottom three units are blinking red. In this situation, even though the LEDs 57 of the second to fifth units are coloured green, these may still not be working in the proper condition, since the first unit is overdriven, which could have its influence on the overall system.

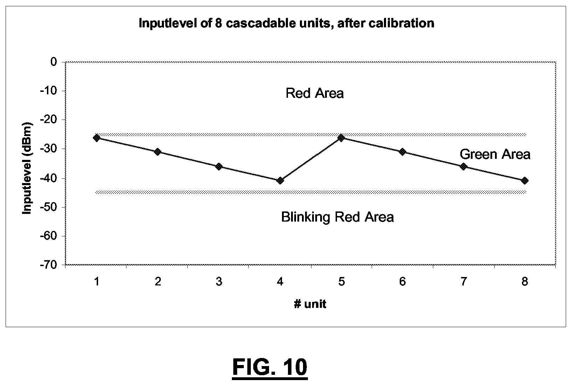

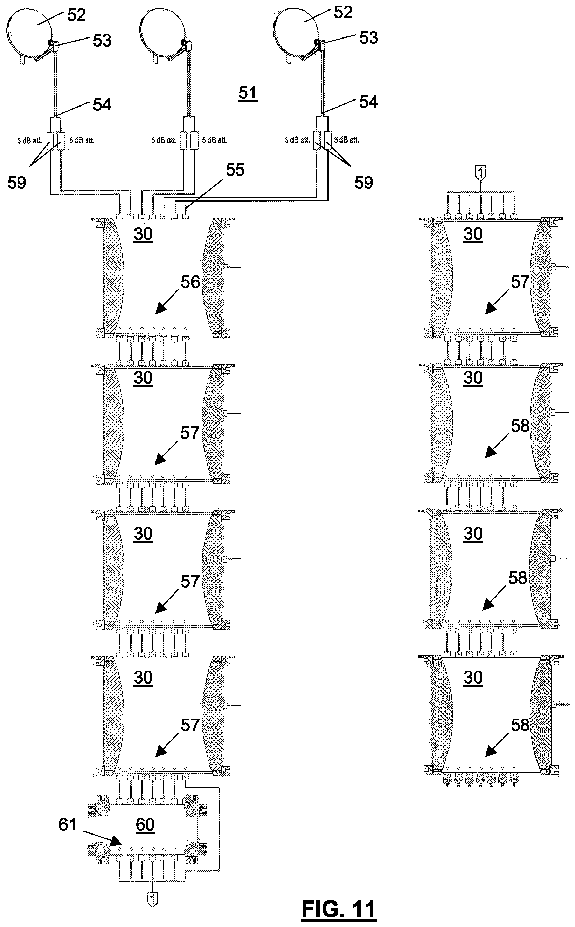

As the first stacker has a too high signal level, the first action of the installer should be to reduce this input level, coming from the head end 51. This can for instance be done by placing an attenuator 59 of for example 5dB on each vertical line 54 coming from the head end 51, as shown in figure 11. The result of this action is shown in figure 9: the first four units now have input levels falling within the green window, while due to the reduced level at the head end 51 now the bottom four units have input levels falling below the window. This will be indicated on the system by four sets of blinking red LEDs, so the next step by the installer should be to increase the input level before the fifth unit. This can for instance be done by inserting an amplifier 60 of 20dB, as shown in figure 11. The result of this action is shown in figure 10: now all units have input levels within the predetermined green window. As a result, in figure 11 all LEDs 56, 57, 58 on all eight stackers 30 are now green coloured. This means the installation is "calibrated" and ready to be used.

As appears from the above, it is important that the installer follows the direction of the signal, this means he first has to look at the LEDs of the first cascadable unit near the head end. And only when those are green, he can look at the second unit and act according the colour of these LEDs. As soon as also these LEDs are green, he can go to the next unit and so on. If he executes this algorithm until the last unit, the result will be a "calibrated system" with optimal, i.e. the least possible hardware usage.

In the above explanation of the calibration system of figures 7 and 11, all vertical lines were assumed to be equal and to be treated equally. For non-equal vertical lines, the use of adjustable attenuators and/or amplifiers is a possible solution to the problem. In this case, it could for example occur that at a certain point, the left-most amplifier is set at maximum gain, while the right-most amplifier on of that same certain point is set to the minimum gain. Even a mixture of amplifiers and attenuators at the inputs of the same cascadable unit can be necessary to obtain all green LEDs. In this case, it is preferred to use separate intermediate units, compared to for instance a "6-way amplifier in 1 housing" like the amplifier 60 in figure 11. This amplifier is also equipped with LEDs 61 to show the signal level at its output.

A small enhancement could be reached if the installer is educated to find the level where the LEDs are just not red, but green. This means the level at this point is just below the "too high" level. In this way, the maximum number of cascadable units can be connected without need of a next intermediate unit. This is the case if the cascadable units have insertion loss on the vertical lines. If they would have gain, then, depending on the length of the cable, it could be more useful to aim for the lowest part of the green window.

The present invention can also be based on 1 limit instead of 2 limits, for instance by defining only an upper limit for the signal level. In this case, the blinking red is eliminated, and the installer can only detect if the signal is too strong. The same can be worked out with only the red blinking lower limit.

In the cascadable units, a different amount of indicators can be implemented with respect to the amount of "vertical" lines. LEDs can be multiplexed or maybe some lines are not useful to be calibrated, like the terrestrial path in some cases.

Instead of incorporating the indicators inside the cascadable units, these indicators can also be designed as add-on products, only being inserted inside the system during installation. This could save costs as 1 indicator device can then serve several installations.

The invention can also be used on the horizontal lines, acting as customer drops. A similar principle for detecting levels by a level indicator can be implemented. Implementing the invention in the horizontal lines can be treated in the same way as in the previously described vertical lines. So this will not be discussed in detail.

## Claims

1. A method for installing a multiple dwelling unit system of TV-signal distribution units for distributing TV-signals coming from a head end over a building, the system comprising:
plurality of groups of two or more TV-signal distribution units (10; 30) connected to each other in cascade, each TV-signal distribution unit comprising a plurality of lines for transporting input signals coming from the head end from an input side to an output side of the unit, at least one of the TV-signal distribution units of each group comprising:
- at least one measurement means (21; 32) on each of the lines for measuring a signal characteristic of a TV-signal transported on that line, and
- a programmable processing means (22; 33) connected to the measurement means and provided for comparing each of the measured signal characteristics with at least one programmable reference value and determining a signal quality from each comparison; and
- indicator means (11; 31) connected to said programmable processing means and provided for indicating each of said signal qualities to an installer of the system;
the method comprising the step of:
a) installing one of the groups of two or more TV-signal distribution units (10; 30) by connecting the input side of an uppermost TV-signal distribution unit of the group being installed at step a to lines for transporting TV-signals originating from the head end (1; 51) and subsequently connecting any other TV-signal distribution units of the group being installed at step a in cascade on the output side of the uppermost TV-signal distribution unit;
**characterized in that** the method further comprises the steps of:
b) checking the signal quality on each of the lines by means of the indicator means (11; 31) of the two or more TV-signal distribution units of the group installed at step a in the direction of the TV-signals starting from the uppermost TV-signal distribution unit of the group installed at step a;
c) where necessary as indicated by the indicator means of the TV-signal distribution unit being checked at step b, installing one of the intermediate units (18; 59; 60) before the uppermost TV-signal distribution unit (10; 30) of the group installed at step a and/or in between two TV-signal distribution units (10; 30) of the group installed at step a;
d) on the lines where necessary as indicated by the indicator means of the TV-signal distribution unit being checked at step b, adjusting the signal characteristic by means of the adjustment means of the installed intermediate unit and/or further adjustment means (23; 34) of the TV-signal distribution units (10; 30).

2. The method according to claim 1, further comprising the steps of, when installing a system comprising a plurality of groups, repeating steps a) to d) for at least one subsequent group of two or more TV-signal distribution units (10; 30) connected to each other in cascade.

3. The method according to claim 1 or 2, **characterised in that** all TV-signal distribution units (10; 30) of each of said groups comprise said measurement means (21; 32), said programmable processing means (22; 33) and said indicator means (11; 31).

4. The method according to any one of the preceding claims, **characterised in that** each of said signal qualities comprises at least values which are indicative of the transported signal being "suitable" or "unsuitable" for distribution towards end-users.

5. The method according to any one of the preceding claims, **characterised in that** each of said at least one TV-signal distribution unit (10; 30) comprises the further adjustment means (23; 34) for adjusting the signal characteristic, which is measured by the measurement means, of the signal transported on at least one of the lines.

6. The method according to claim 5, **characterised in that** said programmable processing means (33) are provided for controlling said adjustment means (34).

7. The method according to any one of the preceding claims, **characterised in that** each of said intermediate units (18; 60) further comprises:
- at least one further measurement means on each of the lines for measuring a signal characteristic of a TV-signal transported on that line,
- a further programmable processing means connected to the measurement means and provided for comparing each of the measured signal characteristics with at least one programmable reference value and determining a signal quality from each comparison,
- further indicator means (19; 61) connected to said programmable processing means and provided for indicating each of said signal qualities to an installer of the system.

8. The method according to any one of the preceding claims, **characterised in that** the number of lines of each of the TV-signal distribution units (10; 30) comprises 1 terrestrial input and/or 2, 4, 8, 12 or 16 satellite IF inputs.

9. The method according to any one of the preceding claims, **characterised in that** said measurement means (21; 32) comprise signal level measurement instruments, the programmable processing means (22; 33) being provided for comparing the measured signal levels with pre-programmed lower and upper reference values, to verify whether the signal level on the respective line is inside or outside a given window.

10. The method according to any one of the preceding claims, **characterised in that** said indicator means (11; 19; 31; 61) comprise LEDs of different colours or multicolour LEDs.

11. The method according to claim 10, **characterised in that** the intermediate unit (19; 59; 60) comprises an amplifier/attenuator with an amplifying/attenuating circuit for amplifying/attenuating the signal level of at least one of the signals on the lines.

## Patentansprüche

1. Verfahren zum Installieren eines Mehrwohnungseinheitssystem von TV-Signal-Verteilungseinheiten zum Verteilen von TV-Signalen, die von einem Kopfende über einem Gebäude kommen, wobei das System Folgendes beinhaltet:
eine Vielzahl von Gruppen von zwei oder mehreren TV-Signal-Verteilungseinheiten (10; 30), die miteinander in Kaskadenschaltung verbunden sind, wobei jede TV-Signal-Verteilungseinheit eine Vielzahl von Leitungen zum Transportieren von Eingangssignalen, die vom Kopfende kommen, von einer Eingangsseite zu einer Ausgangsseite der Einheit beinhalten, wobei mindestens eine der TV-Signal-Verteilungseinheiten von jeder Gruppe Folgendes beinhaltet:
- mindestens ein Messmittel (21; 32) auf jeder der Leitungen zum Messen einer Signalcharakteristik eines auf dieser Leitung transportierten TV-Signals, und
- ein programmierbares Verarbeitungsmittel (22; 33), das mit dem Messmittel verbunden ist und zum Vergleichen von jeder der gemessenen Signalcharakteristiken mit mindestens einem programmierbaren Bezugswert und Bestimmen einer Signalqualität von jedem Vergleich bereitgestellt ist; und
- Anzeigemittel (11; 31), das mit dem programmierbaren Verarbeitungsmittel verbunden ist und zum Anzeigen von jeder der Signalqualitäten gegenüber einem Installateur des Systems bereitgestellt ist;
wobei das Verfahren die folgenden Schritte beinhaltet:
a) Installieren von einer der Gruppen von zwei oder mehreren TV-Signal-Verteilungseinheiten (10; 30) durch Verbinden der Eingangsseite einer obersten TV-Signal-Verteilungseinheit der bei Schritt a installierten Gruppe mit Leitungen zum Transportieren von TV-Signalen, die vom Kopfende (1; 51) ausgehen, und anschließendes Verbinden beliebiger anderer TV-Signal-Verteilungseinheiten der bei Schritt a installierten Gruppe in Kaskadenschaltung an der Ausgangsseite der obersten TV-Signal-Verteilungseinheit;
**dadurch gekennzeichnet, dass** das Verfahren ferner die folgenden Schritte beinhaltet:
b) Prüfen der Signalqualität auf jede der Leitungen mittels der Anzeigemittel (11; 31) der zwei oder mehreren TV-Signal-Verteilungseinheiten der bei Schritt a installierten Gruppe in der Richtung der TV-Signale, beginnend an der obersten TV-Signal-Verteilungseinheit der bei Schritt a installierten Gruppe;
c) bei Bedarf, wie durch das Anzeigemittel der bei Schritt b geprüften TV-Signal-Verteilungseinheit angezeigt, Installieren von einer der Zwischeneinheiten (18; 59; 60) vor der obersten TV-Signal-Verteilungseinheit (10; 30) der bei Schritt a installierten Gruppe und/oder zwischen zwei TV-Signal-Verteilungseinheiten (10; 30) der bei Schritt a installierten Gruppe;
d) auf den Leitungen bei Bedarf, wie durch das Anzeigemittel der bei Schritt b geprüften TV-Signal-Verteilungseinheit angezeigt, Einstellen der Signalcharakteristik mittels dem Einstellungsmittel der installierten Zwischeneinheit und/oder einem weiteren Einstellungsmittel (23; 34) der TV-Signal-Verteilungseinheiten (10; 30).

2. Verfahren gemäß Anspruch 1, das ferner die Schritte, wenn ein System, das eine Vielzahl von Gruppen beinhaltet, installiert wird, Wiederholen der Schritte a) bis d) für mindestens eine anschließende Gruppe von zwei oder mehreren TV-Signal-Verteilungseinheiten (10; 30), die miteinander in Kaskadenschaltung verbunden sind, beinhaltet.

3. Verfahren gemäß Anspruch 1 oder 2, **dadurch gekennzeichnet, dass** alle TV-Signal-Verteilungseinheiten (10; 30) von jeder der Gruppen das Messmittel (21; 32), das programmierbare Verarbeitungsmittel (22; 33) und das Anzeigemittel (11; 31) beinhalten.

4. Verfahren gemäß einem der vorhergehenden Ansprüche, **dadurch gekennzeichnet, dass** jede der Signalqualitäten mindestens Werte beinhaltet, die dafür indikativ sind, dass das transportierte Signal für die Verteilung in Richtung Endbenutzer "geeignet" oder "ungeeignet" ist.

5. Verfahren gemäß einem der vorhergehenden Ansprüche, **dadurch gekennzeichnet, dass** jede der mindestens einen TV-Signal-Verteilungseinheit (10; 30) das weitere Einstellungsmittel (23; 34) zum Einstellen der Signalcharakteristik, die durch das Messmittel gemessen wird, des auf mindestens einer der Leitungen transportierten Signals beinhaltet.

6. Verfahren gemäß Anspruch 5, **dadurch gekennzeichnet, dass** die programmierbaren Verarbeitungsmittel (33) zum Steuern der Einstellungsmittel (34) bereitgestellt sind.

7. Verfahren gemäß einem der vorhergehenden Ansprüche, **dadurch gekennzeichnet, dass** jede der Zwischeneinheiten (18; 60) ferner Folgendes beinhaltet:
- mindestens ein weiteres Messmittel auf jeder der Leitungen zum Messen einer Signalcharakteristik eines auf dieser Leitung transportierten TV-Signals,
- ein weiteres programmierbares Verarbeitungsmittel, das mit dem Messmittel verbunden ist und zum Vergleichen von jeder der gemessenen Signalcharakteristiken mit mindestens einem programmierbaren Bezugswert und Bestimmen einer Signalqualität von jedem Vergleich bereitgestellt ist,
- weiteres Anzeigemittel (19; 61), das mit dem programmierbaren Verarbeitungsmittel verbunden ist und zum Anzeigen von jeder der Signalqualitäten gegenüber einem Installateur des Systems bereitgestellt ist.

8. Verfahren gemäß einem der vorhergehenden Ansprüche, **dadurch gekennzeichnet, dass** die Anzahl an Leitungen von jeder der TV-Signal-Verteilungseinheiten (10; 30) 1 terrestrischen Eingang und/oder 2, 4, 8, 12 oder 16 Satelliten-IF-Eingänge beinhaltet.

9. Verfahren gemäß einem der vorhergehenden Ansprüche, **dadurch gekennzeichnet, dass** das Messmittel (21; 32) Signalpegelmessinstrumente beinhaltet, das programmierbare Verarbeitungsmittel (22; 33) zum Vergleichen der gemessenen Signalpegel mit vorprogrammierten unteren und oberen Bezugswerten bereitgestellt ist, um zu verifizieren, ob der Signalpegel auf der jeweiligen Leitung innerhalb oder außerhalb eines gegebenen Fensters liegt.

10. Verfahren gemäß einem der vorhergehenden Ansprüche, **dadurch gekennzeichnet, dass** das Anzeigemittel (11; 19; 31; 61) LEDs mit unterschiedlichen Farben oder mehrfarbige LEDs beinhaltet.

11. Verfahren gemäß Anspruch 10, **dadurch gekennzeichnet, dass** die Zwischeneinheit (19; 59; 60) einen Verstärker/Dämpfer mit einer Verstärkungs-/Dämpfungsschaltung zum Verstärken/Dämpfen des Signalpegels von mindestens einem der Signale auf den Leitungen beinhaltet.

## Revendications

1. Procédé permettant l'installation d'un système pour unité d'habitations multiples d'unités de distribution de signal de télévision permettant la distribution de signaux de télévision provenant d'une tête de ligne sur un bâtiment, ledit système comprenant :
une pluralité de groupes de deux unités de distribution de signal de télévision (10, 30), ou
plus, connectées les unes aux autres en cascade, chaque unité de distribution de signal de télévision comprenant une pluralité de lignes destinées au transport des signaux d'entrée provenant de la tête de ligne depuis un côté entrée jusqu'à un côté sortie de l'unité, au moins l'une des unités de distribution de signal de télévision de chaque groupe comprenant :
- au moins un moyen de mesure (21, 32) sur chacune des lignes permettant de mesurer une caractéristique de signal d'un signal de télévision transporté sur cette ligne, et
- des moyens de traitement programmable (22, 33) connectés au moyen de mesure et permet de comparer chacune des caractéristiques de signal mesurées avec au moins une valeur de référence programmable et de déterminer une qualité de signal à partir de chaque comparaison ; et
- un moyen d'indication (11, 31) connecté auxdits moyens de traitement programmable et permettant d'indiquer chacune des qualités de signal à un installateur du système ;
ledit procédé comprenant les étapes de :
a) installation d'un des groupes de deux unités de distribution de signal de télévision (10, 30), ou plus, en connectant le côté entrée d'une unité de distribution de signal de télévision la plus supérieure du groupe installée à l'étape a aux lignes pour le transport des signaux de télévision provenant de la tête de ligne (1, 51) et en connectant par la suite n'importe quelle autre unité de distribution de signal de télévision du groupe installé à l'étape a en cascade sur le côté sortie de l'unité de distribution de signal de télévision la plus supérieure ; **caractérisé en ce que** ledit procédé comprend en outre les étapes de :
b) vérification de la qualité de signal sur chacune des lignes à l'aide d'un moyen d'indication (11, 31) des deux unités de distribution de signal de télévision, ou plus, du groupe installé à l'étape a selon la direction des signaux de télévision commençant à partir de l'unité de distribution de signal de télévision la plus supérieure du groupe installé à l'étape a;
c) si nécessaire, comme indiqué par le moyen d'indication de l'unité de distribution de signal de télévision vérifiée à l'étape b, installation de l'une des unités intermédiaires (18, 59, 60) avant l'unité de distribution de signal de télévision la plus supérieure (10, 30) du groupe installée à l'étape a et/ou entre deux unités distribution de signal de télévision (10, 30) du groupe installé à l'étape a ;
d) sur les lignes si nécessaire tel qu'indiqué par le moyen d'indication de l'unité de distribution de signal de télévision vérifiée à l'étape b, réglage de la caractéristique de signal à l'aide du moyen de réglage de l'unité intermédiaire installée et/ou d'un moyen de réglage supplémentaire (23, 34) des unités de distribution de signal de télévision (10, 30).

2. Procédé selon la revendication 1, comprenant en outre les étapes de, lorsque l'installation d'un système comprend une pluralité de groupes, répétition des étapes a) à d) pour au moins un groupe suivant de deux unités de distribution de signal de télévision (10, 30), ou plus, connectées l'une à l'autre en cascade.

3. Procédé selon la revendication 1 ou 2, **caractérisé en ce que** toutes les unités de distribution de signal de télévision (10, 30) de chacun desdits groupes comprennent ledit moyen de mesure (21, 32), ledit moyen de traitement programmable (22, 33) et ledit moyen d'indication (11, 31).

4. Procédé selon l'une quelconque des revendications précédentes, **caractérisé en ce que** chacune desdites qualités de signal comprend au moins des valeurs indiquant que le signal transporté est « approprié » ou « inapproprié » pour une distribution vers les utilisateurs finaux.

5. Procédé selon l'une quelconque des revendications précédentes, **caractérisé en ce que** chacune desdites au moins une unité de distribution de signal de télévision (10, 30) comprend le moyen de réglage supplémentaire (23, 34) pour régler la caractéristique de signal, qui est mesurée par le moyen de mesure, du signal transporté sur au moins l'une des lignes.

6. Procédé selon la revendication 5, **caractérisée en ce que** lesdits moyen de traitement programmable (33) permettent de commander ledit moyen de réglage (34).

7. Procédé selon l'une quelconque des revendications précédentes, **caractérisé en ce que** chacune desdites unités intermédiaires (18, 60) comprend en outre :
au moins un moyen de mesure supplémentaire sur chacune des lignes permettant de mesurer une caractéristique de signal d'un signal de télévision transporté sur cette ligne, des moyens de traitement programmable supplémentaires connectés au moyen de mesure et prévu pour comparer chacune des caractéristiques de signal mesurées avec au moins une valeur de référence programmable et déterminer une qualité de signal à partir de chaque comparaison,
un moyen d'indication supplémentaire (19, 61) connecté auxdits moyens de traitement programmable et prévu pour indiquer chacune desdites qualités de signal à un installateur du système.

8. Procédé selon l'une quelconque des revendications précédentes, **caractérisé en ce que** le nombre de lignes de chacune des unités de distribution de signal de télévision (10, 30) comprend 1 entrée terrestre et/ou 2, 4, 8, 12 ou 16 entrées satellite à fréquence intermédiaire.

9. Procédé selon l'une quelconque des revendications précédentes, **caractérisé en ce que** ledit moyen de mesure (21, 32) comprend des instruments de mesure de niveau de signal, lesdits moyens de traitement programmable (22, 33) permettant de comparer les niveaux de signal mesurés avec des valeurs de référence inférieure et supérieure préprogrammées, pour vérifier si le niveau du signal sur la ligne respective est à l'intérieur ou à l'extérieur d'une fenêtre donnée.

10. Procédé selon l'une quelconque des revendications précédentes, **caractérisé en ce que** ledit moyen d'indication (11, 19, 31, 61) comprend des LEDs de couleurs différentes ou des LEDs multicolores.

11. Procédé selon la revendication 10, **caractérisé en ce que** l'unité intermédiaire (19,59,60) comprend un amplificateur/atténuateur avec un circuit d'amplification/d'atténuation servant à amplifier/atténuer le niveau de signal d'au moins l'un des signaux sur les lignes.
